# EUROPEAN PATENT SPECIFICATION

(11) **EP 0 747 123 B1**
(45) Date of publication and mention of the grant of the patent: **24.09.2003**
(21) Application number: 96304095.1
(22) Date of filing: 05.06.1996
(51) Int. Cl.: B01J 23/22

(54) **Acid/base-catalysed gas phase reaction on organic compounds in the presence of a solid vanadium pentoxide hydrate acid-base catalyst**
Säure/Base-katalysierte Gasphasenreaktion an organischen Verbindungen mittels eines festen, vanadiumpentoxidhydrathaltigen Katalysator
Réaction en phase gazeuse des composes organiques, catalysé par un catalyseur acide-base solide comprennant de l'hydrate de pentoxide de vanadium

(30) Priority: 08.06.1995 JP 14226595
(43) Date of publication of application: 11.12.1996
(73) Proprietor: NIPPON SHOKUBAI CO., LTD., Chuo-ku, Osaka-shi, Osaka-fu 541 (JP)
(72) Inventor: Kishimoto, Nobuji, Room 901, Himeji-shi, Hyogo 670 (JP); Matsunami, Etsushige, Himeji-shi, Hyogo 672 (JP)
(74) Representative: West, Alan Harry

(56) References cited:
- EP-A- 0 350 344
- DE-A- 2 408 910
- DE-A- 3 006 287
- US-A- 2 510 803
- DATABASE WPI Section Ch, Week 9317 Derwent Publications Ltd., London, GB; Class A41, AN 93-140211 XP002023911 & JP-A-05 078 130 (NIPPON SHEET GLASS CO LTD) , 30 March 1993
- REVUE DE CHIMIE MIN RALE, vol. 19, 1982, pages 485-495, XP002023910 P. ALDEBERT ET AL.: "V2O5 GELS: A VERSATILE HOST STRUCTURE FOR INTERCALATION"

## Description

The present invention relates to the catalysis of gas phase reactions using a solid acid-base catalyst comprising vanadium pentoxide hydrate. Various reactions can be so catalysed, such as synthesis of olefins (alkenes) or ethers through dehydration of alcohols, synthesis of aldehydes or ketones through dehydrogenation of alcohols, hydration and isomerization of olefins, alkylation, esterification, amidation, acetalization, amination, hydrogen shift aldol condensation and polymerization.

Conventionally, many processes have been carried out using a solid acid catalyst or a solid base catalyst, such as dehydration of alcohols, hydration and isomerization of olefins, alkylation, esterification aldol condensation and polymerization.

As such solid acid-base catalysts, there are known various solid acid catalysts such as zeolites, silica-aluminas and titania-silicas and solid base catalyst, such as magnesium oxide and calcium oxide.

However, these conventional solid acid and solid base catalysts have the disadvantage that strict reaction conditions such as high temperatures and high pressures are required.

In addition, these conventional solid acid catalysts also have the disadvantage that their activity is reduced due to deactivation caused by carbon deposition during the reaction.

Therefore, there is a desire to obtain solid acid and solid base catalysts which are capable of being prepared easily with excellent reproducibility and of displaying catalytic activity under mild reaction conditions, without deactivation, as well as solid acid-base cooperative catalysts which have an acid point and base point, that is peculiar to a solid, and highly selectively produces reactions through a concerted action of both active points (hereinafter, these catalysts are referred to as solid-base catalysts).

The present invention is based upon the observation that a solid acid-base catalyst comprising vanadium pentoxide hydrate satisfies these criteria in that it is able to catalyse a wide variety of gas phase organic acid-base reactions.

Vanadium pentoxide hydrate has previously been described in a number of publications. For example, Revue de Chimie Minérale 19 (1982) 485 describes vanadium pentoxide hydrate xerogel V₂O₅-1.6H₂O and its intercalation with organic solvents, nitrogen-containing organic compounds such as N-methylacetamide or organometallic complexes such as cobaltocene. It suggests that such materials may be useful as catalysts but fails to describe or suggest specific reactions or use of the intercalated vanadium pentoxide hydrate as an acid-base catalyst.

Similarly, EP-A-0350344 describes vanadium pentoxide hydrate gel V₂O₅·nH₂O and such a gel intercalating a polyoxocation such as [Al₁₃O₄(OH)₂₄]⁷⁺. It describes also the use of the intercalated lamellar gel in organic synthesis, for example hydroxylation of phenol using H₂O₂ in the liquid phase. It fails to describe or suggest the use of vanadium pentoxide hydrate as a gas phase catalyst in organic reactions.

Further DE-A-3006287 describes the recovery of vanadium values from crude iron using potash and working up the slag to produce vanadium pentoxide hydrate and potassium fertiliser. It makes no mention or suggestion of using the vanadium pentoxide hydrate as a catalyst.

Also, US-A-2 510 803 describes the preparation of a catalyst by coating inert particles with an aqueous colloidal solution of vanadium pentoxide and the use of such a catalyst for the vapor-phase oxidation of naphthalene to produce phthalic anhydride at elevated temperatures, for example 500 to 525 °C.

According to the present invention, there is now provided a method for catalyzing a gas phase acid-base reaction of an organic compound, the method comprising contacting a gas containing the organic compound with a solid acid-base catalyst comprising vanadium pentoxide hydrate, the gas phase acid-base reaction being be selected from dehydration, dehydrogenation, isomerization, alkylation, esterification, amidation, acetalization, amination, hydrogen shift, aldol condensation and polymerization.

It is desirable that the vanadium pentoxide hydrate has a composition which is represented by the following general formula (1):

V₂O₅·nH₂O (1)

(n: 0.1 - 3).

This catalyst displays catalytic activity under mild conditions for various acid-base reactions, such as the synthesis of olefins and ethers through dehydration of alcohols, the synthesis of aldehydes and ketones through dehydrogenation of alcohols, the hydration and isomerization of olefins, alkylation, esterification, amidation, acetalization, amination, hydrogen shift, aldol condensation, and polymerization.

It is desirable that the vanadium pentoxide hydrate has a layer structure and is obtained by intercalating at least one kind of substance selected from metallic ions, ammonium ions and metal complexes. The vanadium pentoxide hydrate may also be obtained by intercalating an organic substance between its layers, preferably an organic compound containing nitrogen.

Since the catalytic activity can be improved by adjusting, the acid-base properties of the solid acid-base catalyst in this way, more remarkable catalytic activity can be displayed under mild reaction conditions.

The vanadium pentoxide hydrate is preferably obtained such that after ion exchange of a vanadate aqueous solution using a proton-type cation exchange resin, the ion-exchanged solution is polycondensed and is dried. Alternatively, the vanadium pentoxide hydrate is obtained by adding mineral acid to a vanadate aqueous solution or by hydrolyzing vanadyl alkoxide.

For fuller understanding of the nature and advantages of the invention, reference should be made to the ensuing detailed description taken in conjunction with the accompanying drawing which shows the X-ray diffraction spectrum of a solid acid-base catalyst used in accordance with the present invention.

In the following description, solid acid catalysts solid base catalysts and solid acid-base cooperative catalysts are generically called solid acid-base catalysts.

It is desirable that vanadium pentoxide hydrate is contained in the solid acid-base catalyst in a form of xerogel (dry gel) represented by the general formula (1), for easy handling. "n" of the general formula (1) is not particularly limited as long as it is in the range of 0.1 - 3.

The vanadium pentoxide hydrate used in the present invention is different from vanadium pentoxide anhydride, which is widely used as chief component of catalysts for oxidation and other reactions, in crystal structure and various properties. It is known that vanadium pentoxide anhydride also has acidity but very slight acidity, so its solid acid-base catalytic activity is extremely low compared with vanadium pentoxide hydrate.

The shape of the solid acid-base catalyst is not particularly limited, but when it is used as a fixed bed, for example, it is desirable that after it has been ground by a ball mill or the like, the powder is molded so as to have a fixed shape according to a shape of a reactor. Moreover, it is. desirable that the molded form is crushed, for example, so as to have a grain diameter of suitable mesh. The content of vanadium pentoxide hydrate in the solid acid-base catalyst is not particularly limited.

The solid acid-base catalyst can be obtained by various methods, for example treating a vanadate aqueous solution with a proton-type cation exchange resin and polycondensing and drying it (ie. ion-exchange polymerization), treating a vanadate aqueous solution with mineral acid, such as nitric acid, sulfuric acid or hydrochloric acid and filtering and drying the precipitate (ie. mineral acid treatment), drying the gel obtained by hydrolyzing vanadyl alkoxide, such as vanadyl ethoxide, vanadyl isopropoxide or vanadyl butoxide (ie. alkoxide method), and heating V₂O₅ at a high temperature and melting it, and rapidly contacting it with water (ie. melt quench method).

Ion-exchange polymerisation is particularly preferred.

With the mineral acid treatment, since the solid acid-base catalyst obtained contains residual group of vanadate and mineral acid as impurities, constant product properties cannot be obtained. Furthermore, the filtrate contains a lot of vanadium and so the yield of vanadium pentoxide hydrate is low.

In the alkoxide method, vanadyl alkoxide raw material is expensive, and a lot of organic solvent, such as alcohol, is required. Moreover, the properties of the catalyst obtained by hydrolyzing gelation are greatly changed, so it is difficult to obtain a solid acid-base catalyst having constant properties.

In the melt quench method, the yield is extremely low when general apparatus is used, so it is necessary to use a special and expensive apparatus.

With ion-exchange polymerization since constant catalyst properties can be obtained quantitatively with good reproducibility by using simple apparatus, this method is advantageous. Morever the proton-type cation exchange resin can be used repeatedly by regenerating it with hydrochloric acid or the like.

vanadate used as the raw material in the ion-exchange polymerization is not particularly limited, but metavanadate ion is preferred as the anion, and alkaline metal and/or ammonium are preferred as the cation. Examples are ammonium metavanadate, sodium metavanadate and potassium metavanadate.

The proton-type cation exchange resin is not particularly limited, but a strong acid proton-type cation exchange resin is more preferable.

The concentration of the vanadate aqueous solution is not particularly limited, but a lower limit of 0.01 mol/L is preferred 0.03 mol/L is more preferred and 0.05 mol/L is most preferred. It is not desirable for the concentration of the vanadate aqueous solution to be lower than 0.01 mol/L, because the polymerization rate is decreased, and requires too much time. Moreover, the upper limit represents the solubility limit which for ammonium metavanadate is about 0.8 mol/L, but is preferably 0.4 mol/L and more preferably 0.2 mol/L.

The vanadate aqueous solution may be allowed to drip or flow over the proton-type cation exchange resin, and as a result, a proton-type vanadate aqueous solution can be easily obtained. Conditions, such as treatment time and treatment temperature, are not particularly limited. The proton-type cation exchange resin can be repeatedly used by regenerating it with hydrochloric acid or the like, for example.

The reaction conditions under which a vanadate aqueous solution is polycondensed are not particularly limited. After standing at room temperature for a long time, for example, vanadate is naturally polycondensed, but its polymerization speed can be increased by heating. It is preferable that the reaction temperature is not higher than 100°C. The reaction time depends upon the reaction temperature and the concentration of the vanadate aqueous solution, but at room temperature, for example, not less than one day is preferable and not less than 7 days is more preferable. At 80°C, for example, about 3 to 4 hours is sufficient. As a result, a sol composed of colloidal particles of polyvanadate can be easily obtained. Polymerization degree is not particularly limited.

The drying temperature is not particularly limited, but its upper limit represents a temperature at which the vanadium pentoxide hydrate loses crystallization water and undergoes phase transition to V₂O₅ (about 350°C). Therefore, from a viewpoint of stability, temperatures not higher than 300°C are preferred and temperatures not higher than 250°C are more preferable. Drying may be carried out under normal pressure (atmospheric pressure) or under reduced pressure.

The solid acid-base catalyst displays sufficient catalytic activity under mild reaction conditions for various reactions, such as synthesis of olefins and ethers through dehydration of alcohol, synthesis of aldehydes and ketones through dehydrogenation of alcohols, hydration and isomerization of olefin, alkylation, esterification, amidation, acetalization, amination, hydrogen shift, aldol condensation and polymerization. The reaction. used for these various reactions is not particularly limited, but a fixed-bed flow-type reactor is preferable.

The solid acid-base catalyst is particularly suitable as a solid acid catalyst for dehydration of alcohols, dehydrogenation of alcohols, isomerization of olefins, and esterification of carboxylic acids with alcohols.

For example, when the catalyst is used for the dehydration of alcohol, ether and/or olefin can be obtained. In the case of isopropyl alcohol, for example, diisopropyl ether and propylene are obtained. In the case of t-butyl alcohol and ethyl alcohol, ethyl t-butyl ether and isobutene are obtained. Moreover, when the catalyst is used for dehydrogenation of alcohol, ketone or aldehyde is obtained. Here, the alcohol is not particularly limited. Moreover, the reaction conditions, such as usage of the catalyst with respect to the alcohol, are not particularly limited.

In addition, for example, when the solid acid-base catalyst is used for isomerization of olefins, an isomeric compound is obtained. In the case of 1-butene, for example, 2-butene is obtained. Here, the olefin is not particularly limited. Moreover, the reaction conditions, such as usage of the catalyst with respect to olefin are not particularly limited.

When the catalyst is used for esterification of carboxylic acids with alcohols, for example, an esterified compound is obtained. In the case of acetic acid and ethyl alcohol, for example, ethyl acetate is obtained. Here, the carboxylic acid and the alcohol are not particularly limited. Moreover, the reaction conditions, such as usage of the catalyst with respect to the carboxylic acid and the alcohol, are not particularly limited.

The reaction pressure of the above reactions is not particularly limited. Moreover, the reaction temperature in these reactions is not particularly the limited, but its upper limit represents the temperature at which the vanadium pentoxide hydrate loses water of crystallization and undergoes phase transition to V₂O₅ (about 350°C). Therefore, temperatures not higher than 300°C are preferred and temperatures not higher than 250°C are more preferable. The above reactions may be carried out under applied pressure or normal pressure (atmospheric pressure) or reduced pressure.

The solid acid-base catalyst may also contain (intercalate) between the layers of the vanadium pentoxide kind of substance selected from metal ions, ammonium ions, metal complexes and organic substance as the occasion demands. A plurality of such substances may be combined.

As the intercalant, the metal ions are not particularly limited, but examples are Li⁺, Na⁺, K⁺, Ca²⁺, Mg²⁺, Al³⁺, Cu²⁺, Ag⁺, Ni²⁺, CO³⁺, Fe³⁺ and La³⁺.

Similarly, the amonium ions are not limited to NH₄⁺, but they may be (alkyl) ammonium ions represented by the following general formula:

R¹R²R³R⁴N⁺

(in the formula, R¹, R², R³, R⁴ represent respectively independent hydrogen or alkyl group).

Also, the metal complexes are not particularly limited, but examples are metallocene, bipyridyl complexes and the like which contain transition metals.

The organic substance is not particularly limited although a compound containing nitrogen is preferable. Examples of such compounds containing nitrogen are aniline, pyridine, bipyridine, viologen and pyrazine.

The amount of the intercalant in the solid acid-base catalyst is not particularly limited, but it is preferable that a molar ratio of the intercalant to V (intercalant/V) is in the range of 0.01 - 8, and more preferably is in the range of 0.1 - 5.

The method of including the intercalant is not particularly limited. For example, a vanadium pentoxide hydrate xerogel powder may be soaked in a solution including intercalant, or vanadium pentoxide hydrate hydrogel or hydrosol may be mixed with a solution including the intercalant, or a salt, metal complex or organic substance containing metal ions or ammonium ions may be directly mixed with a hydrogel or hydrosol of the vanadium pentoxidehydrate, and then dried.

Drying may be carried out in the same manner as that when no intercalation is carried out. The drying temperature is not particularly limited as long as it is not higher than that (about 350°C) at which vanadium pentoxide hydrate loses water of crystallization and undergoes the phase transition to V₂O₅. Therefore, the temperature can be determined based upon a type of intercalant to be used, but from a viewpoint of stability, a temperature not higher than 300°C is preferable and not higher than 250°C is more preferable. Drying may be carried out under normal pressure (atmospheric pressure) or reduced pressure.

When the solid acid-base catalyst with the intercalant is used for the dehydration or dehydrogenation of alcohols, for example, not only ether and/or olefin but also ketone or aldehyde are obtained. When Cu²⁺, Na⁺, K⁺, Mg²⁺, Ca²⁺ or Al³⁺ is used as the intercalant and isopropyl alcohol is used as the alcohol, for example, not only diisopropyl ether and propylene but also acetone are obtained. Moreover, when pyridine is used as the intercalant and isopropyl alcohol is used as the alcohol, for example, only propylene and acetone are selectively obtained. Here, the alcohol is not particularly limited. Furthermore, the reaction conditions, such as usage of the solid acid-base catalyst to the alcohol are not particularly limited.

The reaction pressure is not particularly limited, but the temperature is subject to the considerations discussed above.

The following Examples illustrate the invention.

### [EXAMPLE 1]

An ammonium metavanadate aqueous solution (concentration: 0.1 mol/L) was let into a column of proton-type cation exchange resin (made by The Dow Chemical Co., DOWEX "registered trademark", 50W-X4, 50 mesh - 100 mesh), and ions were exchanged therein so that a proton-type vanadate aqueous solution was prepared. Thereafter, this vanadate aqueous solution was set aside for two weeks at room temperature so that the vanadic acid was polymerized spontaneously, and dark red polyvanadic acid sol was obtained.

Next, the polyvanadic acid sol was dried in air at 120°C for one whole day and night, and then calcined in air at 250°C for two hours so that blackish brown xerogel was obtained. Successively, after the xerogel was ground for 10 minutes by a ball mill and the obtained powder was press molded, its grain size was made uniform to 9 mesh - 16 mesh so that a solid acid-base catalyst was obtained.

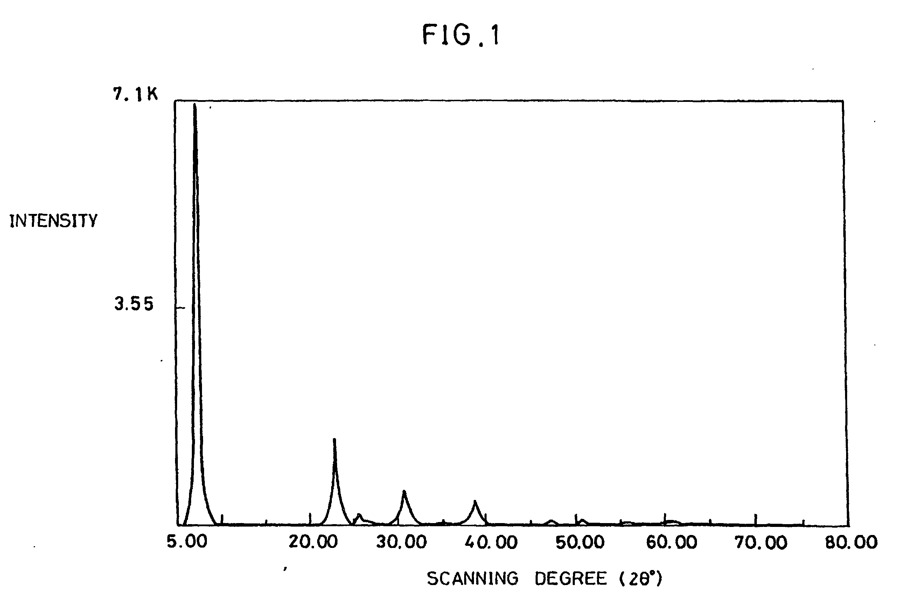

The X-ray diffraction spectrum was measured, and its substance was identified. As a result, it was confirmed that the solid acid-base catalyst contained vanadium pentoxide hydrate represented by the general formula (1). Moreover, it was confirmed that the vanadium pentoxide hydrate had a layer crystal structure in which an interlayer spacing was 11.5Å in air at room temperature and that "n" of the general formula (1) was 1.6. The X-ray diffraction spectrum is shown in FIG. 1.

Next, the following various reaction were conducted by using the solid acid-base catalyst.

First, ether was synthesized through dehydration of alcohol. 1.0 g of the solid acid-base catalyst was charged into a reactor constructed of stainless steel with internal diameter of 10mm. Then, mixed gas, which was obtained by mixing t-butyl alcohol, ethyl alcohol and helium in a molar ratio of 1:1:15 was passed through the reactor at a rate of 64 ml/min. The reaction conditions were normal pressure and a temperature of 90°C.

15 minutes after the start of the reaction, the product was analyzed by gas chromatography. Conversion of t-butyl alcohol was 28.2% and conversion of ethyl alcohol was 16.0%. Moreover, selectivity of ethyl t-butyl ether product was 44.3% on the basis of the t-butyl alcohol and 78.1% on the basis of the ethyl alcohol. Further, selectivity of isobutene product was 35.7%.

Next, dehydration and dehydrogenation of alcohol were conducted. 1.2 g of the solid acid-base catalyst was charged into a reactor which is similar to that used above. Then, mixed gas obtained by mixing isopropyl alcohol and helium in a molar ratio of 1:7.3, was passed through the reactor at a rate of 64 ml/min. The reaction conditions were normal pressure and a temperature of 160°C.

15 minutes after the start of the reaction, the product was analyzed by gas chromatography. Conversion of isopropyl alcohol was 73.7%. Moreover, selectivity of propylene, diisopropyl ether and acetone products was respectively 47.3%, 37.1 and 10.6%.

Next, isomerization of olefin was conducted. 1.2 g of the solid acid-base catalyst was charged into a reactor which is similar to that used above. Then, mixed gas, obtained by mixing 1-butene and helium in a molar ratio of 1:14.5, was passed through the reactor at a ratio of 46 ml/min. The reaction conditions were normal pressure and a temperature of 160°C.

15 minutes after the start of the reaction, the product was analyzed by gas chromatography. Conversion of 1-butene was 12.6%. Moreover, selectivity of cis-2-butene and trans-2-butene products was respectively 60.5% and 39.5%.

Next, esterification was conducted. 1.2 g of the solid acid-base catalyst was charged into a reactor similar to that used above. Then, mixed gas, obtained by mixing acetic acid, ethyl alcohol and helium in a molar ratio of 1:1.7:12.7, was passed through the reactor at a speed of 65 ml/min. The reaction conditions were normal pressure and a temperature of 140°C.

15 minutes after the start of the reaction, the product was analyzed by reaction, product was analyzed by gas chromatography. Conversion of acetic acid was 16.6%, and conversion of, ethyl alcohol was 17.5%. Moreover, selectivity of ethyl acetate product was 85.5% on a basis of acetic acid and 47.7% on a basis of ethyl alcohol.

### [EXAMPLE 2]

The polyvanadic acid sol obtained in Example 1 was dried at 200°C so that a blackish brown xerogel was obtained. Then, after the xerogel was ground for 10 minutes by a ball mill, the obtained powder was press molded so that a grain size was made uniform to 9 mesh - 16 mesh and a solid acid-base catalyst was obtained.

The X-ray diffraction spectrum was measured, the spectrum was the same as that of the solid acid-base catalyst of Example 1 and shown in FIG. 1. It was confirmed that the solid acid-base catalyst contained vanadium pentoxide hydrate represented by the general formula (1). Moreover, it was confirmed that the vanadium pentoxide hydrate had a layer crystal structure in which an interlayer spacing was 11.5Å in air at room temperature and that "n" of the general formula (1) was 1.6.

1.0 g of the solid acid-base catalyst was charged into a reactor which is similar to that used in Example 1. Then, mixed gas obtained by mixing isopropyl alcohol, oxygen and helium in a molar ratio of 1:1:6.25 was passed through the reactor at a rate of 64 ml/min. The reaction conditions were normal pressure and a temperature of 140°C.

15 minutes after the start of the reaction, the product was analyzed by gas chromatography. Conversion of isopropyl alcohol was 37.5%. Moreover, selectivity of propylene, diisopropyl ether and acetone products was respectively 51.1%, 32.2% and 14.5%.

### [EXAMPLE 3]

5g of the powder obtained from the vanadium pentoxide hydrate in Example 1 was soaked in 125 mL of acetonitrile solution mixed with pyridine (pyridine concentration: 0.1 mol/L), at room temperature for 2 days. Then, the powder was fittered off and rinsed with acetonitrile, and the powder was dried at 200°C. The powder was press molded, and its grain size was made uniform to 9 mesh - 16 mesh so that the solid acid-base catalyst was obtained.

The X-ray diffraction spectrum was measured and was the same as that of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 13.0 Å. As a result, it was confirmed that pyridine was intercalated between the layers of the vanadium pentoxide hydrate. As a result of elementary analysis, the molar ratio of the intercalated pyridine was found to be 0.61 to V.

1.0 g of the solid acid-base catalyst was charged into a reactor similar to the reactor used in Example 1. Then, mixed gas obtained by mixing isopropyl alcohol, oxygen and helium in a molar ratio of 1:1:6:25, was passed through the reactor at a rate of 64 ml/min. The reaction conditions were normal pressure and a temperature of 140°C.

15 minutes after the start of the reaction, the products were analyzed by gas chromatography. Conversion of isopropyl alcohol was 55.4%. Moreover, selectivity of acetone and propylene products was respectively 44.4% and 39.6%. Diisopropyl ether was not formed.

### [EXAMPLE 4]

The polyvanadic acid sol of Example 1 was diluted with water, and thus 2.5 lit. of liquid whose vanadium ion concentration was 0.03 mol/L was obtained. 300 mL of water, in which 18.12 g of Cu(NO₃)₂·3H₂O was dissolved, was added to the solution, and it was agitated at room temperature for 1 hour. Brown precipitate was filtered off, agitation and rinsing of the precipitate for 30 minutes using 2 lit. of water were repeated twice and the precipitate was dried at 200°C. Then, after the precipitate was ground for 10 minutes by a ball mill, the powder was press molded and its grain size was made uniform to 9 mesh - 16 mesh so that a solid acid-base catalyst was obtained.

The X-ray diffraction, spectrum was measured and was the same as that of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 11.3 Å. As a result, it was confirmed that Cu²⁺ was intercalated between the layers of the vanadium pentoxide hydrate. As a result of elementary analysis, a molar ratio of the intercalated Cu²⁺ was found to be 0.59 to V.

1.0 g of the solid acid-base catalyst was charged into a reactor similar to the reactor used in Example 1. Then, mixed gas obtained by mixing isopropyl alcohol, oxygen and helium in a molar ratio of 1:1:6.25, was passed through the reactor at a rate of 64 ml/min. The reaction conditions were normal pressure and a temperature of 140°C.

15 minutes after the start of the reaction, the products were analyzed by gas chromatography. Conversion of isopropyl alcohol was 50.7%. Moreover, selectivity of propylene, diisopropyl ether and acetone products was respectively 49.6%, 28.8% and 15.2%.

### [EXAMPLE 5]

The polyvanadic acid sol of Example 1 was diluted with water, and 2.5 lit. of liquid whose vanadium ion concentration was 0.03 mol/L was obtained. 300 mL of water, in which 31.87 g of NaNO₃ was dissolved, was added to the liquid, and it was agitated at room temperature for 1 hour. Brown precipitate was filtered, off, agitation and rinsing of the precipitate for 30 minutes using 2 lit. of water were repeated twice and the precipitate was dried at 200°C. Then, the precipitate was ground for 10 minutes by a ball mill and the powder was press molded, its grain size was made uniform to 9 mesh - 16 mesh so that a solid acid-base catalyst was obtained.

The X-ray diffraction spectrum was measured and was the same as the diffraction pattern of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 11.1 Å. As a result, it was confirmed that Na⁺ was intercalated between the layers of the vanadium pentoxide hydrate, As a result of elementary analysis, a molar ratio of the intercalated Na⁺ was found to be 1.24 to V.

Namely, 1.0 g of the solid acid-base catalyst was charged into a reactor similar to the reactor used in Example 1. Then, mixed gas obtained by mixing isopropyl alcohol, oxygen and helium in a molar ratio of 1:1:6.25, was passed through the reactor at a rate of 64 ml/min. The reaction conditions were normal pressure and a temperature of 140°C.

15 minutes after the start of the reaction, the products were analyzed by gas chromatography. Conversion of isopropyl alcohol was 21.1%. Moreover, selectivity of propylene, diisopropyl ether and acetone products was respectively 44.1%, 33.6% and 17.8%.

### [EXAMPLE 6]

The polyvanadic acid sol of Example 1 was diluted with water, and thus 2.5 lit. of liquid whose vanadium ion concentration was 0.03 mol/L was obtained. 300 mL of water; in which 37.90 g of KNO₃ was dissolved, was added to the liquid, and agitated at room temperature for 1 hour. Brown precipitate was filtered off, agitation and rinsing of the precipitate for 30 minutes using 2 lit. of water were repeated twice and the precipitate was dried at 200°C. Then, after the precipitate was ground for 10 minutes by a ball mill and the powder was press molded, its grain size was made uniform to 9 mesh - 16 mesh so that a solid acid-base catalyst was obtained.

The X-ray diffraction spectrum was measured and was the same as the diffraction pattern of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 10.9 Å. As a result, it was confirmed that K⁺ was intercalated between the layers of the vanadium pentoxide hydrate. As a result of elementary analysis, a molar ratio of the intercalated K⁺ was found to be 0.41 to V.

1.0 g of the solid acid-base catalyst was charged into a reactor similar to the reactor used in Example 1. Then, mixed gas obtained by mixing isopropyl alcohol, oxygen and helium in a molar ratio of 1:1:6.25, was passed through the reactor at a rate of 64 ml/min. The reaction conditions were normal pressure and a temperature of 140°C.

15 minutes after the start of the reaction, the products were analyzed by gas chromatography. Conversion of the isopropyl alcohol was 30.7%. Moreover, selectivity of propylene, diisopropyl ether and acetone products was respectively 33.4%, 40.5% and 26.2%.

### [EXAMPLE 7]

The polyvanadic acid sol of Example 1 was diluted with water, and thus 2.5 lit. of liquid whose vanadium ion concentration was 0.03 mol/L was obtained. 300 mL of water, in which 19.23 g of Mg(NO₃)₂·6H₂O was dissolved, was added to the liquid, and it was agitated at room temperature for 1 hour. Brown precipitate was filtered off, agitation and rinsing of the precipitate for 30 minutes using 2 lit. of water were repeated twice and the precipitate was dried at 200°C. Then, after the precipitate was ground for 10 minutes by a ball mill and the obtained powder was press molded, its grain size was made uniform to 9 mesh - 16 mesh so that a solid acid-base catalyst was obtained.

The X-ray diffraction spectrum was measured and was the same as the diffraction pattern of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 13.4 Å. As a result, it was confirmed that Mg²⁺ was intercalated between the layers of the vanadium pentoxide hydrate. As a result of elementary analysis, a molar ratio of the intercalated Mg²⁺ was found to be 3.88 to V.

1.0 g of the solid acid-base catalyst was charged into a reactor similar to the reactor used in Example 1. Then, mixed gas obtained by mixing isopropyl alcohol, oxygen and helium in a molar ratio of 1:1:6.25, was passed through the reactor at a rate of 64 ml/min. The reaction conditions were normal pressure and a temperature of 140°C.

15 minutes the after the start of the reaction, the products were analyzed by gas chromatography. Conversion of isopropyl alcohol was 39.2%. Moreover, selectivity of propylene, diisopropyl ether and acetone products was respectively 39.9%, 40.1% and 16.7%.

### [EXAMPLE 8]

The polyvanadic acid sol of Example 1 was diluted with water, and 2.5 lit. of liquid whose vanadium ion concentration was 0.03 mol/L was obtained. 300 mL of water, in which 17.71 g of Ca(NO₃)₂4H₂O was dissolved, was added to the liquid, and it was agitated at room temperature for 1 hour. Brown precipitate was filtered off, agitation and rinsing of the precipitate for 30 minutes using 2 lit. of water were repeated twice and the precipitate was dried at 200°C. Then, after the precipitate was ground for 10 minutes by a ball mill and the powder was press molded, its grain size was made uniform to 9 mesh - 16 mesh so that a solid acid-base catalyst was obtained.

The X-ray diffraction spectrum was measured and was the same as the diffraction pattern of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 12.9 Å. As a result, it was confirmed that Ca²⁺ was intercalated between the layers of the vanadium pentoxide hydrate. As a result of elementary analysis, a molar ratio of the intercalated Ca²⁺ was found to be 10.65 to V.

1.0 g of the solid acid-base catalyst was charged into a reactor similar to the reactor used in Example 1. Then, mixed gas obtained by mixing isopropyl alcohol, oxygen and helium in a molar ratio of 1:1:6.25, was passed through the reactor at a rate of 64 ml/min. The reaction conditions were normal pressure and a temperature of 140°C.

15 minutes the after the start of the reaction, the products were analyzed by gas chromatography. Conversion of isopropyl alcohol was 30.9%. Moreover, selectivity of propylene, diisopropyl ether and acetone products was respectively 46.6%, 32.5% and 20.9%.

### [EXAMPLE 9]

The polyvanadic acid sol of Example 1 was diluted with water, and 2.5 lit. of liquid whose vanadium ion concentration was 0.03 mol/L was obtained. 300 mL of water, in which 28.13 g of Al(NO₃)₃·9H₂O was dissolved, was added to the liquid, and it was agitated at room temperature for 1 hour. Brown precipitate was filtered off, agitation and rinsing of the precipitate for 30 minutes using 2 lit. of water were repeated twice and the precipitate was dried at 200°C. Then, after the precipitate was ground for 10 minutes by a ball mill and the powder was press molded, its grain size was made uniform to 9 mesh - 16 mesh so that a solid acid-base catalyst was obtained.

The X-ray diffraction spectrum was measured and was the same as the diffraction pattern of the vanadium pentoxide hydrate which was obtained in Example 1 and shown in FIG. 1 and its layer crystal structure was maintained. Moreover, it was confirmed that a peak position of the X-ray diffraction spectrum of the solid acid-base catalyst was shifted from the peak position of the X-ray diffraction spectrum of the vanadium pentoxide hydrate, which was obtained in Example 1 and shown in FIG. 1, and that an interlayer spacing of the layer crystal structure was changed to 13.6 Å. As a result, it was confirmed that Al³⁺ was intercalated between the layers of the vanadium pentoxide hydrate. As a result of elementary analysis, a molar ratio of the intercalated Al³⁺ was found to be 3.52 to V.

1.0 g of the solid acid-base catalyst was charged into a reactor similar to the reactor used in Example 1. Then, mixed gas obtained by mixing isopropyl alcohol, oxygen and helium in a molar ratio of 1:1:6.25, was passed through the reactor at a rate of 64 ml/min. The reaction conditions were normal pressure and a temperature of 140°C.

15 minutes after the start of the reaction, the products were analyzed by gas chromatography. Conversion of isopropyl alcohol was 35.3%. Moreover, selectivity of propylene, diisopropyl ether and acetone products was respectively 40.7%, 38.5% and 16.5%.

Details of the intercalant (molar ratio) and interlayer spacings of the layer crystal structures in the solid acid-base catalysts in Examples 2 through 9 are shown in TABLE 1.

**TABLE 1**

| | Intercalant | Intercalant/V (molar ratio) | interlayer spacing of layer crystal structure (Å) |
|---|---|---|---|
| Example 2 | ― | ― | 11.5 |
| Example 3 | Pyridine | 0.61 | 13.0 |
| example 4 | Cu²⁺ | 0.59 | 11.3 |
| Example 5 | Na⁺ | 1.24 | 11.1 |
| Example 6 | K⁺ | 0.41 | 10.9 |
| Example 7 | Mg²⁺ | 3.88 | 13.4 |
| Example 8 | Ca²⁺ | 0.65 | 12.9 |
| Example 9 | Al³⁺ | 3.52 | 13.6 |

The results of the dehydration and dehydrogenation reactions of isopropyl alcohol using the solid acid-base catalyst obtained in Examples 2 through 9 are shown in TABLE 2.

**TABLE 2**

| | Inteccalant | Conversion (%) | selectivity (%) | | |
|---|---|---|---|---|---|
| | | Isopropyl alcohol | propylene | isopropyl ether | Acetone |
| Example 2 | ― | 37.5 | 51.1 | 32.2 | 14.5 |
| Example 3 | Pyridine | 55.4 | 39.6 | ― | 44.4 |
| Example 4 | Cu²⁺ | 50.7 | 49.6 | 28.8 | 15.2 |
| Example 5 | Na⁺ | 21.1 | 44.1 | 33.6 | 17.8 |
| Example 6 | K⁺ | 30.7 | 33.4 | 40.5 | 26.2 |
| example 7 | Mg²⁺ | 39.2 | 39.9 | 40.1 | 16.7 |
| Example 8 | Ca2⁺ | 30.9 | 46.4 | 32.5 | 20.9 |
| Example 9 | Al³⁺ | 35.3 | 40.7 | 38.5 | 16.5 |

## Claims

1. A method for catalyzing a gas phase acid-base reaction of an organic compound, the method comprising contacting a gas containing the organic compound with a solid acid-base catalyst comprising vanadium pentoxide hydrate, the gas phase acid-base reaction being selected from dehydration, dehydrogenation, isomerization, alkylation, esterification, amidation, acetalization, amination, hydrogen shift, aldol condensation and polymerization.

2. A method according to claim 1, wherein the vanadium pentoxide hydrate has the formula:
V₂O₅·nH₂O
in which n has a value from 0.1 to 3.

3. A method according to claim 1 or claim 2, wherein the vanadium pentoxide hydrate has a layer structure and at least one substance selected from metal ions, ammonium ions and metal complexes is intercalated between the layers.

4. A method according to claim 1 or claim 2, wherein the vanadium pentoxide hydrate has a layer structure and an organic substance is intercalated between the layers.

5. A method according to claim 4, wherein the organic substance is a compound containing nitrogen.

6. A method according to claim 1 or claim 2, wherein the vanadium pentoxide hydrate is obtained by ion exchange of a vanadate aqueous solution with a proton-type cation exchange resin, polycondensing the ion-exchanged solution and drying the product.

7. A method according to claim 1 or claim 2, wherein the vanadium pentoxide hydrate is obtained by adding mineral acid to an aqueous solution of a vanadate.

8. A method according to claim 1 or claim 2, wherein the vanadium pentoxide hydrate is obtained by hydrolyzing vanadyl alkoxide.

## Patentansprüche

1. Verfahren zur Katalyse einer Säure-Base-Reaktion einer organischen Verbindung in der Gasphase, wobei das Verfahren ein Kontaktieren eines die organische Verbindung enthaltenden Gases mit einem festes Vanadiumpentoxidhydrat enthaltenden Säure-Base-Katalysator umfasst, und die Säure-Base-Reaktion in der Gasphase aus Dehydrierung, Dehydratisierung, Isomerisation. Alkyllerung, Veresterung, Amidierung, Acetalisierung, Aminierung, Wasserstoffverschiebung, Aldolkondensation und Polymerisation ausgewählt ist.

2. Verfahren nach Anspruch 1, wobei das Vanadiumpentoxidhydrat die Formel:
V₂O₅•nH₂O aufweist,
bei der n einen Wert von 0.1 bis 3 annimmt.

3. Verfahren nach Anspruch 1 oder 2, wobei das Vanadiumpentoxidhydrat eine Schichtstruktur aufweist und zumindest eine Substanz ausgewählt aus Metallionen, Ammoniumionen und Metallkomplexen zwischen den Schichten interkaliert ist.

4. Verfahren nach Anspruch 1 oder 2, wobei das Vanadiumpentoxidhydrat eine Schichtstruktur aufweist und eine organische Substanz zwischen den Schichten interkaliert ist.

5. Verfahren nach Anspruch 4, wobei die organische Substanz eine Stickstoff enthaltende Verbindung ist.

6. Verfahren nach Anspruch 1 oder 2, wobei das Vanadiumpentoxidhydrat durch lonenaustausch einer wässrigen Vanadatlösung mit einem Kationenaustauscherharz auf Protonenbasis, Polykondensation der ionenausgetauschten Lösung und Trocknen des Produktes erhalten wird.

7. Verfahren nach Anspruch 1 oder 2, wobei das Vanadiumpentoxidhydrat durch Zugabe von Mineralsäure zu einer wässrigen Vanadatlösung erhalten wird.

8. Verfahren nach Anspruch 1 oder 2, wobei das Vanadiumpentoxidhydrat durch Hydrolyse von Vanadylalkoxid erhalten wird.

## Revendications

1. Procédé de catalyse d'une réaction acide-base en phase gazeuse d'un composé organique, le procédé comprenant la mise en contact d'un gaz contenant le composé organique avec un catalyseur acide-base solide comprenant de l'hydrate de pentoxyde de vanadium, la réaction acide-base en phase gazeuse étant sélectionnée parmi la déshydratation, la déshydrogénation, l'isomérisation, l'alkylation, l'estérification l'amidation, l'acétalisation, l'amination, le déplacement d'hydrogène, la condensation d'aldol et la polymérisation.

2. Procédé selon la revendication 1, dans lequel l'hydrate de pentoxyde de vanadium présente la formule :
V₂O₅.nH₂O
dans laquelle n a une valeur de 0,1 à 3.

3. Procédé selon la revendication 1 ou la revendication 2, dans lequel l'hydrate de pentoxyde de vanadium a une structure en couches et au moins une substance sélectionnée parmi des ions métalliques, des ions ammonium et des complexes de métal est intercalée entre les couches.

4. Procédé selon la revendication 1 ou la revendication 2, dans lequel l'hydrate de pentoxyde de vanadium a une structure en couches et une substance organique est intercalée entre les couches.

5. Procédé selon la revendication 4, dans lequel la substance organique est un composé contenant de l'azote.

6. Procédé selon la revendication 1 ou la revendication 2, dans lequel l'hydrate de pentoxyde de vanadium est obtenu par échange d'ions d'une solution aqueuse de vanadate avec une résine échangeuse de cations de type protonique, par polycondensation de la solution à ions échangés et séchage du produit.

7. Procédé selon la revendication 1 ou la revendication 2, dans lequel l'hydrate de pentoxyde de vanadium est obtenu en ajoutant de l'acide minéral à une solution aqueuse d'un vanadate.

8. Procédé selon la revendication 1 ou la revendication 2, dans lequel l'hydrate de pentoxyde de vanadium est obtenu en hydrolysant de l'alcoxyde de vanadyle.
